(19) Europäisches Patentamt
European Patent Office
Office européen des brevets

(11) EP 1 985 662 A1

(12) EUROPEAN PATENT APPLICATION

(43) Date of publication:
**29.10.2008 Bulletin 2008/44**

(51) Int Cl.:
***C08L 27/06*** *(2006.01)* ***C08L 29/14*** *(2006.01)*
***C08K 3/26*** *(2006.01)*

(21) Application number: **07106750.8**

(22) Date of filing: **23.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Amer-Sil S.A.**
**8287 Kehlen (LU)**

(72) Inventors:
- **Becker, Claude**
  **57330 Zoufftgen (FR)**
- **Etienne, Stephanie**
  **57070 Metz (FR)**
- **Ruch, David**
  **57120 Pierrevillers (FR)**
- **Toniazzo, Valerie**
  **57100 Thionville (FR)**

(74) Representative: **Kihn, Pierre Emile Joseph et al**
**Office Ernest T. Freylinger S.A.**
**234, route d'Arlon**
**B.P. 48**
**8001 Strassen (LU)**

(54) **Thermal stabilisation of PVC**

(57) A thermally stabilized polyvinyl chloride composition comprising per 100 % by weight of polyvinyl chloride, 5 - 15 % by weight of polyvinyl butyral and 2 - 12 % by weight of $CaCO_3$ nanoparticles, a method for thermally stabilizing PVC compositions as well as the use of such thermally stabilized compositions.

Fig. 2

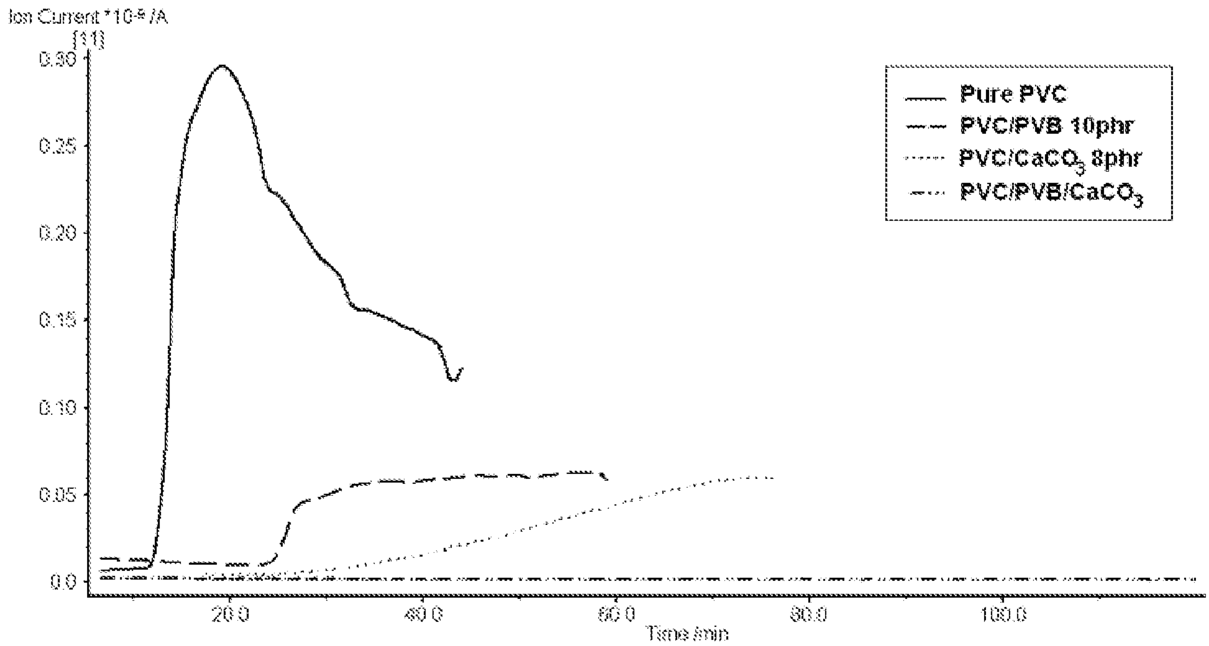




Printed by Jouve, 75001 PARIS (FR)

## Description

### Technical field

The present invention generally relates to the stabilisation of polyvinyl chloride (PVC) against thermal degradation, thermally stabilised PVC compositions and articles made therefrom.

### Background Art

Polyvinyl chloride, commonly abbreviated PVC, is a widely used thermoplastic polymer and in terms of revenue generated, it is one of the most valuable products of the chemical industry. Globally, over 50% of PVC manufactured is used in construction as a cheap and easy to assemble building material. In recent years, PVC has been replacing traditional building materials such as wood, concrete and clay in many areas.

As native PVC is a relatively hard and brittle material, it can be made softer and more flexible by the addition of plasticizers, the most widely used being phthalates. In this form, it is used in clothing and upholstery, and to make flexible hoses and tubing, flooring, roofing membranes, and electrical cable insulation.

Although this largely used polymer has a very large field of applications, some of its properties are not satisfying in some cases. Especially thermal degradation by dehydrochlorination and the subsequent hydrogen chloride release are of particular concern where elevated temperatures cannot be excluded.

### Technical problem

Hence, it is an object of the present invention to provide polyvinyl chloride compositions having enhanced thermal stability, preferably without significantly impairing other properties.

This object is achieved by a composition as claimed in claim 1.

### Description of the Invention

It has been observed, that thermal degradation of PVC exhibits a two-stage degradation. Without wishing to be bound by any theory, the first stage seems to involve mainly dehydrochlorination of the polymer, resulting in the formation of conjugated double bonds that break during the second stage. During this second stage, the degradation of the polymeric chains now comprising such polyene structures occurs and leads to cracking and pyrolysis to low hydrocarbons of linear or cyclic structure.

During the first stage, the main labile sites for dehydrochlorination seem to be secondary and tertiary allylic chlorine, resulting from PVC structural defects.

Hydrogen chloride formed during the degradation increases both the degradation rate and the mean number of double bonds in the polyene sequence, and consequently plays an essential catalytic role in PVC degradation. The more labile chlorines are located close to structural defects.

Scheme 1: Possible mechanisms of stage 1 PVC thermal degradation.

Dehydrochlorination of PVC

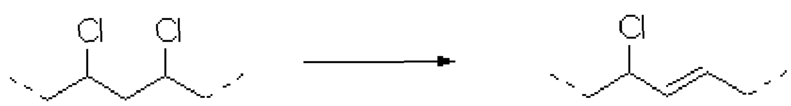

Dehydrochlorination of structural defects

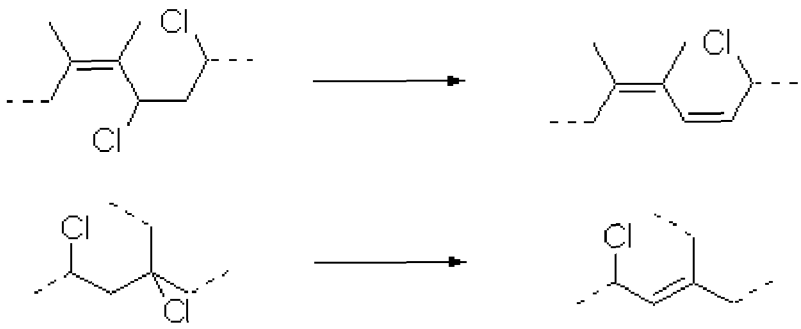

It has been found that PVC compositions according to the invention, comprising

(a) 100 % by weight of polyvinyl chloride,
(b) 5 - 15 % by weight, preferably 7 - 12 % by weight of polyvinyl butyral, and
(c) 2 - 12 % by weight, preferably 4 - 9 % by weight of $CaCO_3$ nanoparticles,

are able to efficiently reduce thermal degradation normally occurring in PVC compositions at elevated temperature.

In the context of the present invention, $CaCO_3$ nanoparticles are defined as being $CaCO_3$ particles whose size is measured in nanometres (nm). Their sizes generally range from 10 to 100 nm, preferably from 30 to 70 nm. The term "nanocomposites", resp. "$CaCO_3$ nanocomposites" as used herein relates to compositions integrating such $CaCO_3$ nanoparticles.

In fact, the first major advantage of compositions of the present invention is their ability to shift the onset of the degradation to higher temperatures and hence to avoid or at least postpone the release of HCl. For the present thermally stabilized polyvinyl chloride compositions, the onset of dehydrochlorination is generally raised by at least 15°C, preferably at least 25°C as compared to comparable compositions not containing (b) and (c).

The second main advantage of such incorporation is that they are capable of efficiently scavenge the labile chlorines at higher temperatures, thereby reducing the risk of hydrogen chloride release.

A third key advantage of the present compositions is that they surprisingly also exhibit a slower degradation kinetic as compared to conventional PVC compositions, leading to an even better thermal stability above the onset temperature.

Hence, the present compositions exhibit increased thermal stability by postponing both the dehydrochlorination process and the associated hydrogen chloride release and by reducing the overall degradation kinetics. It has been observed that the kinetics of dehydrochlorination may be reduced by at least 50 %, preferably by at least 80 % as compared to comparable compositions not containing (b) and (c).

Furthermore, the present compositions have the additional advantage that the presence of PVB gives some self-plasticization for the PVC matrix, thereby reducing at least to some extent the need for extraneous plasticisers often suspected to be at risk to health and environment.

A further particularly important benefit of the invention is that the present stabilisation of PVC compositions allows avoiding the use of lead sulphate or other lead based stabilisers, which present a high toxicity and hence are of particular concern regarding health and environment.

A still further advantage of the present invention is that the above effects are obtained without necessitating the incorporation of important amounts of non-PVC compounds, which would otherwise probably impair known favourable properties of PVC and necessitate more sophisticated equipment to obtain a homogeneous mixture.

The present PVC compositions may also comprise further additives known to the skilled person, depending on the intended use of the compositions, such as plastizisers, pigments, processing aids, ...

In a further aspect, the invention also provides for a method for thermally stabilizing polyvinyl chloride compositions, wherein

(a) 100 % by weight of polyvinyl chloride,
(b) 5 - 15 % by weight of polyvinyl butyral,
(c) 2 - 12 % by weight of $CaCO_3$ nanoparticles

are blended by conventional processes known to the skilled person, such as in solution, by melt compounding or extrusion.

In a still further embodiment, the invention also contemplates the use of such polyvinyl chloride compositions for the manufacture of all kinds of articles, such as floor coverings, window and door profiles and frames, electrical wire and cable insulation and casings, pipes, plumbing and conduit fixtures, flexible hoses and tubing, clothing and upholstery, toys ..., as well as these articles as such.

PVC/PVB/$CaCO_3$ nanocomposites, with optimized concentrations, have been elaborated by melt compounding. Incorporating 10 % by weight of PVB and 8 % by weight of $CaCO_3$ nanoparticles presents an important increase of thermal stabilization. Furthermore, with such concentrations, the mechanical properties of the composites are not dramatically affected.

**Brief Description of the Drawings**

Some embodiments of the invention will now be described, by way of example, with reference to the accompanying drawings in which:

Fig. 1 shows thermogravimetric curves of PVC, PVC/PVB blends, PVC/$CaCO_3$ nanocomposites and PVC/PVB/$CaCO_3$ nanocomposites containing 8 % by weight $CaCO_3$ nanoparticles under nitrogen at a heating rate of 10°C.min$^{-1}$ and a gas flow of 20 mL.min$^{-1}$ and evolution of the relative current of ions at m/z = 35 corresponding to Cl signal (phr = (weight) parts per hundred = % by weight);

Fig. 2 shows the chlorine signal detected by mass spectrometry by heating extruded PVC, PVC/(10 % by weight of PVB) blends, PVC/(8 % by weight of $CaCO_3$) nanocomposites and PVC/(10 % by weight of PVB)/(8 % by weight of $CaCO_3$) nanocomposites samples at 180°C;

Fig. 3 is a plot of In(t) vs. 1/T on the basis of data determined by Arrhenius kinetic model; and

Fig. 4 shows the variation of the storage modulus with temperature for PVC, PVC/PVB blends and PVC/PVB/$CaCO_3$ nanocomposites.

Further details and advantages of the present invention will be apparent from the following detailed experiments. Unless otherwise stated, all percentages by weight herein are expressed as % by weight per 100 % by weight of polyvinyl chloride (PVC).

**Experiments**

**Material, sample preparation and characterization**

Both poly(vinyl chloride) (PVC) and poly(vinyl butyral) (PVB) used in this study, were purchased from Scientific Polymer Products, Inc. Their molecular weights were about 120,000 g.mol$^{-1}$ and 180,000 g.mol$^{-1}$ respectively, with 1 % acetate content for the PVB matrix. Dioctyl phthalate (DOP) and zinc stearate were provided by Scientific Polymer Products. Calcium carbonate nanoparticles (Socal 312V) having a mean particle size of 40 to 60 nm were supplied by Solvay. All materials were used as received.

PVC/PVB binary blends were prepared by mixing both polymers in 100 mL of THF in a crystallizer. The film formed by evaporation of the solvent at room temperature was then dried into an oven at 70°C. The following compositions, given in terms of components, were studied: 100/0, 90/10, 80/20, 60/40, 40/60, 20/80, 0/100.

PVC/$CaCO_3$ nanocomposites were elaborated dissolving 10g of PVC in 100 mL of THF followed by addition of a THF solution containing the nanoparticles. $CaCO_3$ nanoparticles were incorporated in 2, 4, 6, 8, 10 % by weight.

Nanocomposites blends were obtained by compounding PVC (100 % by weight) and PVB (10 % by weight) powders, processing additives (30 % by weight of DOP and 5 % by weight of Zn stearate) and $CaCO_3$ nanoparticles (4 and 8 % by weight) in a twin-screw extruder (DSM Xplore 15 Microcompounder). All of these compounds were melted at 170°C for 5 min at 200 rpm (rotor speed).

Thermogravimetric analysis (TGA) were performed under nitrogen flow (50 mL.min$^{-1}$) at a heating rate of 10K/min from 30°C to 800°C with a STA 409 PC from NETZSCH. The thermogravimetric measurements were coupled with a mass spectrometer (MS) Aëolos 403C from NETZSCH and a Fourier Transform Infrared spectrophotometer (FTIR) TENSOR 27 from BRUKER to identify the species evolved from the sample during the thermogravimetric experiments.

**Example 1: Dynamic thermogravimetric measurements**

Thermal degradation of PVC, PVC/PVB, PVC/$CaCO_3$ and PVC/PVB/CaC03 nanocomposites has been investigated by thermogravimetric analysis (Fig. 1). During the thermogravimetric analysis, the percent weight loss of a test sample is recorded while the sample is being heated at a uniform rate in an appropriate environment. The loss in weight over specific temperature ranges provides an indication of the composition of the sample, including volatiles and inert filler, as well as indications of thermal stability. In this case, evolved gases have been identified via a simultaneous coupling to mass spectrometry (MS). By monitoring the evolution of the relative current of ions at m/z = 35 corresponding to Cl signal, it is possible to follow accurately the release of hydrogen chloride.

As can be seen in Fig. 1, the onset of the thermal degradation of compositions according to the invention is not only shifted to higher temperatures by 20 to 25 °C, but the initial slope, i.e. the initial degradation kinetic is also slowed down. Furthermore, the appearance of chlorine ion is shifted by 30 to 40°C due to the incorporation of 10 % by weight of PVB and 8 % by weight $CaCO_3$ nanoparticles as compared to non stabilized PVC. The same thermogravimetric analysis coupled with IR spectroscopy (not shown) exhibits no HCl band, but the presence of $CO_2$ and $H_2O$ peaks, corresponding to the products obtained during the reaction between $CaCO_3$ nanoparticles and HCl.

**Example 2: Isothermal thermogravimetric measurements**

Isothermal thermogravimetric measurements (Fig. 2) have been performed on extruded samples to follow the chlorine release during PVC degradation. Experiments have been performed at 180°C under nitrogen.

In the case of pure PVC, the degradation is noticed immediately on isothermal segment and is simultaneous with the chlorine release. By 8 % by weight PVB addition, a delay of this signal by about 15 minutes is detected. Incorporation of calcium carbonate nanoparticles affords similar improvement. However, one can note a lower degradation and chlorine release kinetics in this last case. With compositions according to the invention, comprising PVC, PVB and $CaCO_3$ nanoparticles, no chlorine release is detected even after 2 h exposition at 180°C.

**Example 3: Kinetics of isothermal degradation of PVC and PVC composites**

By application of the Arrhenius kinetic model, the degradation activation energy of each extruded sample has been calculated. Degradation kinetic is Arrhenius dependent:

$$k(T) = A \exp(-E_a / RT)$$

Where A is the pre-exponential factor, $E_a$ is the apparent activation energy and R is the gas constant.

By taking the logarithm of both sides of the Arrhenius rate law, we can obtain the equation:

$$\ln k = -(E_a/RT) + \ln A$$

$$\ln k = -(E_a/R)*1/T + \ln A$$

where k represents the time required to release chlorine species at a temperature T (Table 1).

Table 1: Time required to release chlorine species (min) at various temperatures.

| isothermal temperature T (°C) | PVC (min) | PVC/PVB (min) | PVC/$CaCO_3$ (min) | PVC/PVB/$CaCO_3$ (min) |
|---|---|---|---|---|
| 140 | 117.5 | No release | No release | No release |
| 150 | 38.9 | No release | No release | No release |
| 160 | 10.9 | 106.7 | 182.5 | No release |
| 170 | Immediate | 41.5 | 55.4 | No release |
| 180 | Immediate | 7.1 | 30 | 237.5 |
| 190 | Immediate | Immediate | Immediate | 72 |
| 200 | Immediate | Immediate | Immediate | 7.9 |

By plotting In(t) *vs*. 1/T for all experiments as shown in Fig. 3, $E_a$ values can be determined from the slope ($E_a$/R) of the straight lines and are summarized in Table 2.

Table 2: $E_a$ values of chlorine release determined according to Arrhenius kinetic model

| **Sample** | **Ea (kJ .mol$^{-1}$)** |
|---|---|
| PVC | 176.8 |
| PVC/PVB | 221.1 |
| PVC/$CaCO_3$ | 180.4 |
| PVC/PVB/$CaCO_3$ | 303.3 |

**Example 4: Dynamical mechanical properties**

Fig. 4 shows the variation of the storage modulus with temperature for PVC, PVC/PVB blends and PVC/PVB/$CaCO_3$ nanocomposites with ca. 4 and 8 % by weight of $CaCO_3$ nanoparticles. The influence of PVB and $CaCO_3$ contents are investigated at 25°C.

Incorporation of PVB polymer in PVC matrix leads to a decrease of storage modulus of the composite with the increase of PVB content. For a ca. 10 % by weight PVB content, this decrease is acceptable and storage modulus is slightly affected. However, Fig. 4 clearly shows that a high PVB content exhibits a dramatic decrease of storage modulus, whereas $CaCO_3$ nanoparticle incorporation, both in 4 and 8 % by weight, does not affect storage modulus in comparison with the binary blends.

## Claims

1. A thermally stabilized polyvinyl chloride composition comprising

   (a) 100 % by weight of polyvinyl chloride,
   (b) 5 - 15 % by weight of polyvinyl butyral,
   (c) 2 - 12 % by weight of $CaCO_3$ nanoparticles.

2. The thermally stabilized polyvinyl chloride composition according to claim 1, further comprising one or more additive (s), such as plasticizers, pigments, processing aids.

3. The thermally stabilized polyvinyl chloride composition according to claim 1 or 2, wherein the onset of dehydrochlorination is raised by at least 15°C, preferably at least 25°C as compared to comparable compositions not containing (b) and (c).

4. The thermally stabilized polyvinyl chloride composition according to any of claims 1 to 3, wherein the kinetics of dehydrochlorination is reduced by at least 50 % as compared to comparable compositions not containing (b) and (c).

5. A method for thermally stabilizing polyvinyl chloride compositions, wherein

   (a) 100 % by weight of polyvinyl chloride,
   (b) 5 - 15 % by weight of polyvinyl butyral,
   (c) 2 - 12 % by weight of $CaCO_3$ nanoparticles

   are blended, such as in solution, by melt compounding or extrusion.

6. Use of polyvinyl chloride compositions according to claims 1 to 4 for the manufacture of floor coverings, window and door profiles and frames, electrical wire and cable insulation and casings, pipes, plumbing and conduit fixtures, flexible hoses and tubing, clothing and upholstery or toys

7. An article made of compositions as claimed in claims 1 to 4.

Fig. 1

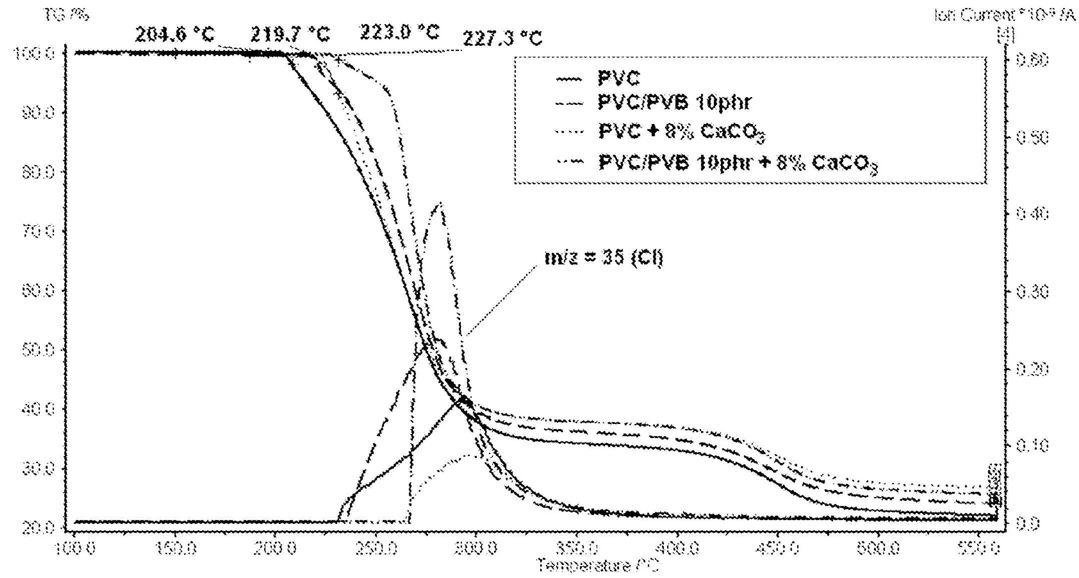
TG /%
Ion Current *10-9 /A
204.6 °C
219.7 °C
223.0 °C
227.3 °C
PVC
PVC/PVB 10phr
PVC + 8% CaCO3
PVC/PVB 10phr + 8% CaCO3
m/z = 35 (Cl)
Temperature /°C

Fig. 2

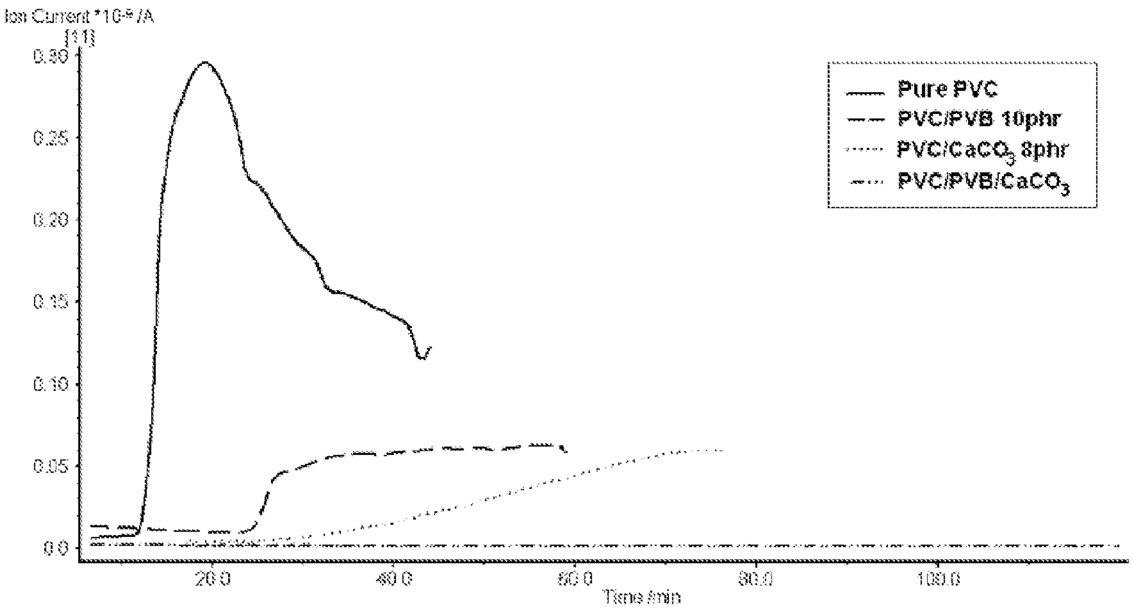
Ion Current *10-9 /A
Pure PVC
PVC/PVB 10phr
PVC/CaCO3 8phr
PVC/PVB/CaCO3
Time /min

Fig. 3

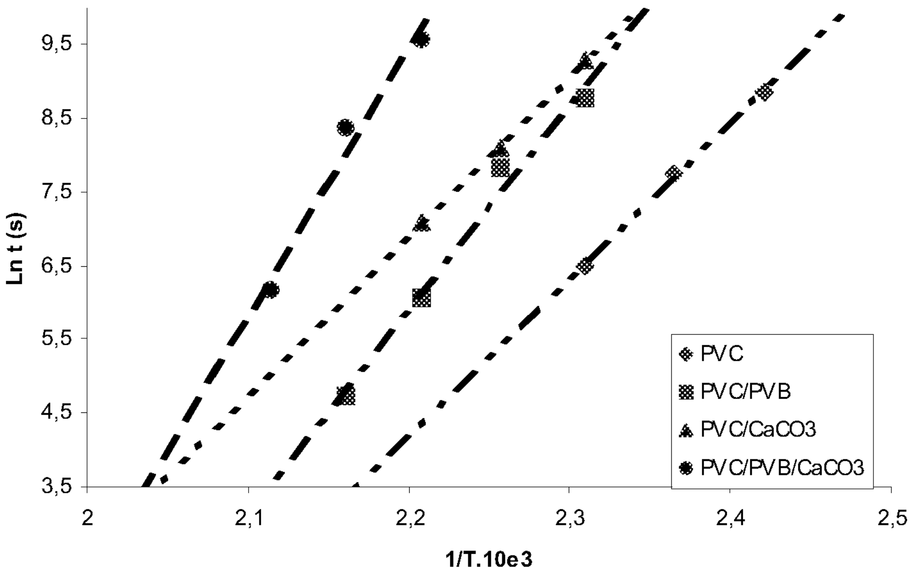
9,5
8,5
7,5
6,5
5,5
4,5
3,5
Ln t (s)
2
2,1
2,2
2,3
2,4
2,5
1/T.10e3
PVC
PVC/PVB
PVC/CaCO3
PVC/PVB/CaCO3

Fig. 4

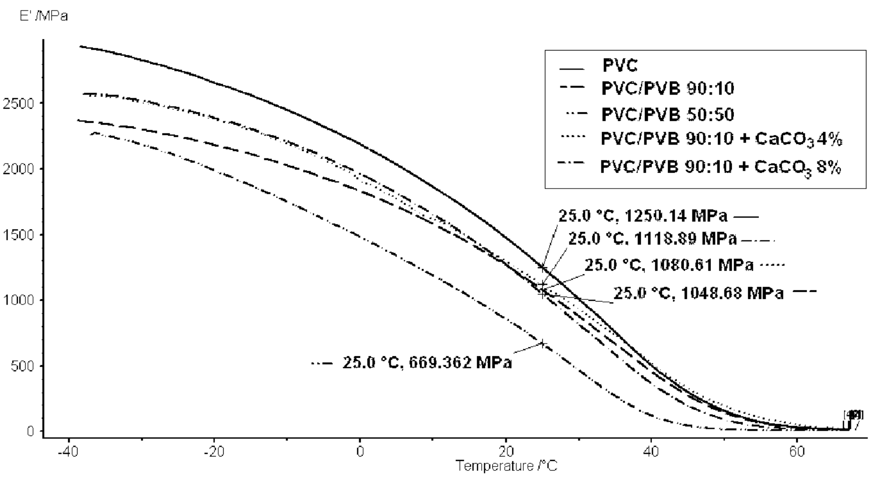
E' /MPa
2500
2000
1500
1000
500
0
-40
-20
0
20
40
60
Temperature /°C
PVC
PVC/PVB 90:10
PVC/PVB 50:50
PVC/PVB 90:10 + CaCO3 4%
PVC/PVB 90:10 + CaCO3 8%
25.0 °C, 1250.14 MPa
25.0 °C, 1118.89 MPa
25.0 °C, 1080.61 MPa
25.0 °C, 1048.68 MPa
25.0 °C, 669.362 MPa

European Patent Office

# EUROPEAN SEARCH REPORT

Application Number
EP 07 10 6750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 698 657 A (REHAU AG & CO [DE]) 6 September 2006 (2006-09-06) * page 5; claims 1-6; examples 1-5; tables 1,2 * | 1-7 | INV. C08L27/06 C08L29/14 C08K3/26 |
| Y | US 5 380 794 A (SCHAEFER RICHARD E [US] ET AL) 10 January 1995 (1995-01-10) * examples 1-14; tables 1-5 * | 1-7 | |
| Y | DE 44 37 161 A1 (KABELMETAL ELECTRO GMBH [DE]) 25 April 1996 (1996-04-25) * column 1, lines 14-48 * * column 3, lines 6,15-60; claim 1 * | 1-7 | |
| Y | EP 0 950 688 A (DUNLOP TECH GMBH [DE]) 20 October 1999 (1999-10-20) * abstract * | 1-7 | |

TECHNICAL FIELDS SEARCHED (IPC)
C08L
C08K

The present search report has been drawn up for all claims

1

| Place of search | Date of completion of the search | Examiner |
|---|---|---|
| The Hague | 13 September 2007 | Jansen, Reinier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 07 10 6750

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2007

| Patent document cited in search report | | Publication date | Patent family member(s) | | | Publication date |
|---|---|---|---|---|---|---|
| EP 1698657 | A | 06-09-2006 | DE | 102005010242 | A1 | 07-09-2006 |
| US 5380794 | A | 10-01-1995 | AT | 182168 | T | 15-07-1999 |
| | | | CA | 2174536 | A1 | 11-05-1995 |
| | | | DE | 69419521 | D1 | 19-08-1999 |
| | | | DE | 69419521 | T2 | 03-02-2000 |
| | | | EP | 0726924 | A1 | 21-08-1996 |
| | | | JP | 3448300 | B2 | 22-09-2003 |
| | | | JP | 9504818 | T | 13-05-1997 |
| | | | KR | 100206346 | B1 | 01-07-1999 |
| | | | WO | 9512637 | A1 | 11-05-1995 |
| DE 4437161 | A1 | 25-04-1996 | NONE | | | |
| EP 0950688 | A | 20-10-1999 | DE | 19817200 | A1 | 21-10-1999 |

EPO FORM P0459

For more details about this annex : see Official Journal of the European Patent Office, No. 12/82